# EUROPEAN PATENT SPECIFICATION

(11) **EP 0 773 853 B1**
(45) Date of publication and mention of the grant of the patent: **01.12.1999**
(21) Application number: 96918113.0
(22) Date of filing: 07.06.1996
(51) Int. Cl.: B23P 15/00, B23D 31/00, B22F 5/00

(54) **METHOD OF MAKING CONNECTING ROD**
VERFAHREN ZUR HERSTELLUNG EINER PLEUELSTANGE
PROCEDE DE FABRICATION D'UNE BIELLE

(30) Priority: 07.06.1995 US 472773
(43) Date of publication of application: 21.05.1997
(73) Proprietor: CUMMINS ENGINE COMPANY, INC., Columbus Indiana 47201 (US)
(72) Inventor: Myers, Martin R., Columbus, IN 47201 (US); Patten, James W., Hope, IN 47246 (US); Becker, Paul C., Bloomington, IN 47401 (US); McInerney, Terry M., Columbus, IN 47201 (US); Potter, Dennis P., Madison, IN 47250 (US); Short, James M., South Commiskey, IN 47227 (US); Biggerstaff, Paul, North Vernon, IN 47565 (US); Stevens, Robert, Columbus, IN 47203 (US)
(74) Representative: Patentanwälte Gesthuysen, von Rohr, Weidener, Häckel
(86) International application number: US9608960
(87) International publication number: WO9640469

(56) References cited:
- EP-A- 0 696 688
- DE-A- 3 904 020
- JP-A- 6 042 525
- JP-B- 59 034 210
- US-A- 4 458 555
- US-A- 4 688 446
- US-A- 4 836 044
- US-A- 4 860 419
- US-A- 5 524 507

## Description

The invention is directed to a method for manufacturing of a fracture split connecting rod for internal combustion engines and other forged components which must be separated for reassembly around another component. In particular, the present invention relates to a method for manufacturing a component according to the preamble of claim 1.

DE - A - 39 04 020, which forms the most relevant prior art, discloses a process for producing sintered components. Each component is constituted of parts which are separately pre-pressed and sintered during the first step. In the second step, the separately formed parts are heated to forging temperature and put into a pre-heated forging tool for bonding the two parts with flat parting planes together and forging the complete component, i.e. a connecting rod. Afterwards, the complete component is cooled down and can be machined mechanically without use of a clamping means. This requires sufficiently high holding forces in the parting plane and, thus, requires respective forging forces when bonding the parts together. However, the holding forces in the parting plane are sufficiently small in order to separate both parts without damaging the parting plane. Finally, a finish heat treatment of the component after the separation of the two parts is provided.

EP - A - 0 696 688, which has to be considered for novelty only, discloses a method for manufacturing a component formed of parts capable of being separated for reassembly around another component. The separate parts can be fabricated inter alia by forging. The separate parts are pressed together with intended dividing faces opposed to each other in a mold, wherein the parts are deformed until the intended dividing faces are cohered to each other. Thus, the split type mechanical component has a closed-adhesive strength as moderate as that the parts are not separated when subjected to a machining step. Finally, the plastically deformed component is broken at the intended dividing faces into the parts for reassembly around another component. Due to the plastically deforming process when bonding the parts together the intended dividing faces are also plastically deformed so that the component cannot be broken along the original contact surfaces.

U.S. patents 4,936,163; 4,993,134; 5,109,605 and 5,131,577 disclose a method for making connecting rods by fracturing a single machined and pre-stressed part. Similar methods for producing connecting rods by fracture splitting a single forged part are also described in the March, 1993, SAE Technical Paper No. 930491, "Recent Developments in Materials and Processes for Automotive Connecting Rods" by Rajeshwar K. Gupta, and in U.S. patents 4,884,900, 4,970,783 and 5,135,587. The materials of the components formed using these fracture splitting techniques are relatively brittle, low ductility (toughness) materials, such as powder forgings, cast iron, etc.

As is described in U.S. patent 3,818,577, fracture splitting is an advantageous technique from the standpoint of reducing manufacturing costs for producing machine components, such as connecting rods for inexpensive engines. But, as they also indicate, high quality connecting rods and the like, such as are utilized for diesel engines and high output gasoline engines, for example, require the use of high strength, high ductility (toughness) materials that are unsuitable for breaking without excessive distortion, For the indicated reason, Bailey et al. disclose a method for manufacturing high strength connecting rods by machining a part formed as a single piece, and then using an electron beam to create a frangible zone of very hard brittle steel along an intended parting plane. This frangible zone is created by heating the material to above the austenitic temperature of the metal and quenching it. The part can then be fractured into two pieces along the embrittled fracture line, so that a pair of pans resuit which have irregular mating surfaces which provide a substantial resistance to sliding between the two parts. However, the electron beam may not be capable of penetrating, and thus treating, parts having thick sections, making it difficult to obtain a thin controlled zone in the bore region. Furthermore, this process creates tool problems when finish machining the bore due to the presence of hard, brittle stripes in the otherwise ductile surface of the bore. Still further, this process requires expensive equipment and an extra processing operation, not to mention the possible need for stress relieving, all of which increase costs.

U.S. patent 3,978,566 discloses a process for fabricating components having members of a split construction with a plurality of matched sections, where the individual components are manufactured separately, preliminarily machined, and then adhesively secured into a bonded assembly which is finish machined as a unit. After it is finish machined, the assembly is cleaved to provide a matched set of sections for the final assembly of the component. However, this technique also has several shortcomings.

Firstly, a two-stage (preliminary and finish) machining process is involved, which is then further complicated if the adhesive is to be removed prior to final assembly of the component. Furthermore, application of adhesive is an extra process step that requires careful cleaning of the joint surfaces, and yet another cleaning step if the adhesive is removed after re-separation of the parts. On the other hand, if the adhesive is not removed once the parts are re-separated, it can act as a gasket precluding the parts from being finally assembled with sufficient tightness, or the adhesive could compress or come off, in whole or part, during installation, adversely affecting tightness and tolerances, posing potential engine problems. Additionally, even if the adhesive does not compress or come off during installation, it could react with oil that is present, e.g., for a connecting rod in an engine environment, and break down as a resuit, again affecting tightness and tolerances. Also, since the mating surfaces are smooth, dowels or other means must be used to preclude relative movement between the parts.

Thus, there is still a need for a fracture splitting process which can be effectively utilized with materials having properties of high strength and high ductility without requiring adhesives or localized embrittlement. Furthermore, it is desirable that such be achieved in a way which produces a self-locating effect between the components to be mated, so as to eliminate the need for separate, added elements, such as dowels or the like.

Object of the present invention is to provide a method for manufacturing connecting rods for internal combustion engines, and other forged components which must be separated for reassembly around another component, which enables the advantages of fracture splitting to be obtained using higher fatigue strength materials than typical "fracturable" materials, such as the powder forgings and cast iron, conventionally used for fracture split forged components, and without using adhesives or localized embrittlement, and in particular to provide a connecting rod manufacturing process by which forged parts can be self-located with respect to each other and at least mechanically and, if applicable, metallugically bonded together prior to any machining thereof, and then, once bonded, can be machined (e.g., rough bored, and drilled and tapped for screws), wherein it is desired to enable fracture splitting of the bonded parts and reassembling without further preparation of the mating faces.

The above and further objects are achieved by a method according to claim 1. Preferred embodiments are subject of the subclaims.

In particular, the process starts by taking separate, e.g., rod and cap, parts and coining or forging them together prior to machining. The mating surfaces of the parts are formed with mating or nesting features such as a dimple-recess or ridge-groove configuration giving them a self-locating ability. After machining, the parts are fractured along the original division to obtain two uniquely matched surfaces that need no further processing before being reassembled.

These and further objects, features and advantages of the present invention will become apparent from the following description when taken in connection with the accompanying drawings which, for purposes of illustration only, show several embodiments in accordance with the present invention. In the drawings
- Figs. 1 & 2: are elevational and cross-sectional views of a connecting link produced in accordance with a first embodiment of the invention,
- Figs. 3 & 4: are side and end elevational views of a rod part of a connecting rod in accordance with a second embodiment of the invention, and
- Figs. 5 & 6: are side and end elevational views of a cap part of a connecting rod in accordance with the second embodiment of the invention.

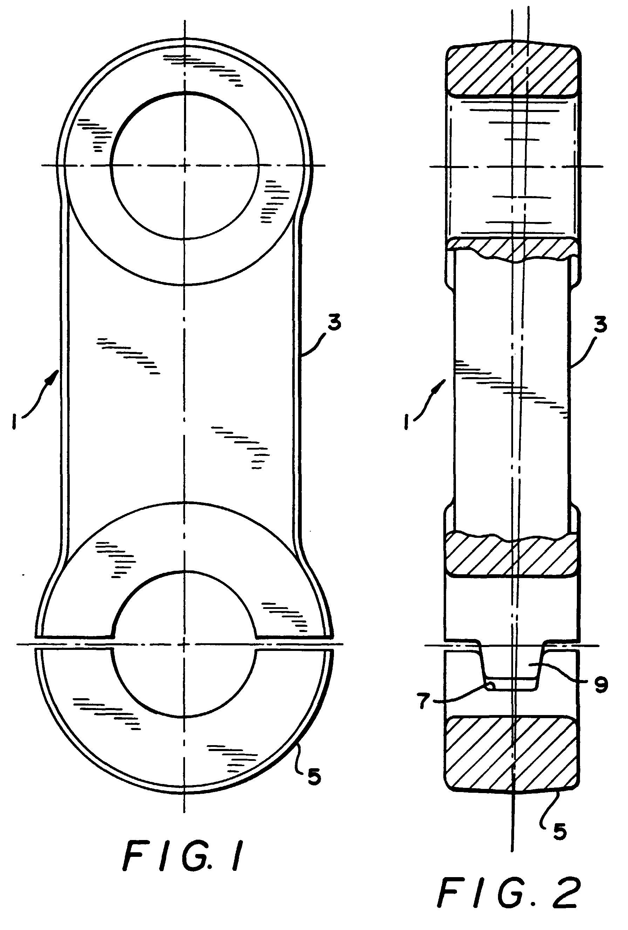

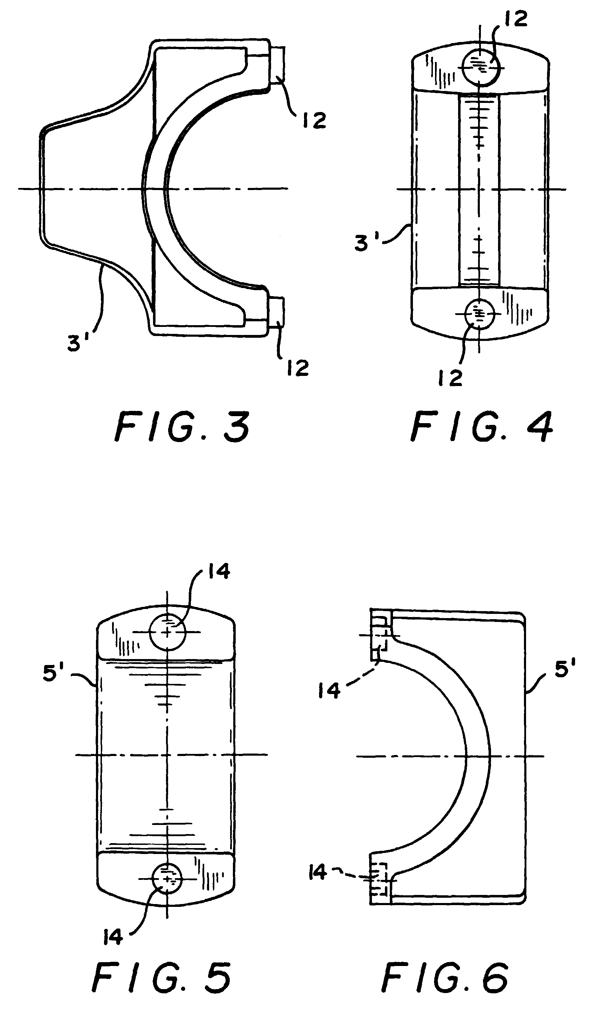

The present invention relates to a method for manufacturing a forged component which is formed of two pieces which must be able to be separated for reassembly around another component. By way of example only, Figs. 1 & 2 show a connecting link 1 comprised of a rod part 3 and a cap part 5, while Figs. 3-6 show a connecting rod 1' for an internal combustion engine having rod 3' and a cap 5' for assembly about, e.g., a crank shaft (not shown).

The rod 3 and cap 5 are forged as two separate pieces made of any conventional high strength, high ductility (toughness) forging alloy known for use for connecting rods. By way of example only, the method can be performed using pieces forged from such steel alloys as 4140 and 15B41A quenched and tempered steels.

The connecting rod 1 is made by hot forging the rod 3 and cap 5 as two separate pieces, where one of the pieces has a wedge-shaped groove 7 and the other has a corresponding wedge-shaped ridge 9 to create interfitting surfaces that act to maintain the pieces in the correct alignment when assembled as shown in Fig. 2. Alternatively, as shown for the embodiment of Figs. 3-6, one of the pieces, e.g., rod 3', can be formed with at least one dimple or lug 12 and the other, e.g., cap 3', with a corresponding dimple- or lug-shaped recess 14.

With the unmachined, forged parts 3, 5 assembled as shown in the figures (or like an assembly of parts 3', 5') by, for example, a press-fit or friction joint, the assembly is forged or cold coined to form a mechanical bond and/or a metallurgical bond between the interfit surfaces thereof. Coatings may be applied to the interfit surfaces prior to assembly and cold coining or forging in order to tailor the bond strength achieved to suitable levels. For example, Boron nitride, graphite, or molybdenum disulfide might be used to produce a weaker bond, while copper or nickel might be used to enhance the resultant bond. The parts 3, 3' and 5, 5' are then machined as a single piece, e.g., rough boring of bore 15, and drilling and tapping for tap screws used for holding parts 3, 5 together in use. After machining of the one-piece assembly, the machined assembly is fracture split along a separation line defined along the original interfit surfaces of the parts 3, 5 or 3', 5', As a result, the original ridge-groove or the dimple/lug-recess combination and the surface asperities produced by the fracturing process enable accurate positioning of the parts 3, 5 or 3', 5' when they are reassembled for installation.

This method dispenses with the need for dowel pins to prevent movement of the assembly, and does not require expensive machining of the contact faces to achieve a proper match of the joint, either preliminary to temporary bonding of the forged parts or subsequent to the fracture splitting of the bonded parts. The advantages of fracture splitting are obtained using higher fatigue strength materials than typical "fracturable" materials, such as the powder forgings and cast iron, conventionally used for fracture split forged components, and without using adhesives or localized embrittlement.

While embodiments in accordance with the present invention have been shown and described, it is understood that the invention is not limited thereto, and is susceptible to numerous changes and modifications as known to those skilled in the art. For example, while the invention has been described with respect to the production of a connecting rod for an internal combustion engine and is particularly advantageous in that context, it will be applicable to the production of a wide range of other parts which must be separated for reassembly around an other component, such as journal boxes, bearing shells, etc. Therefore, this invention is not limited to the details shown and described herein, and includes all such changes and modifications as are encompassed by the scope of the appended claims.

The present invention will find a wide range of applicability for the production of components, such as connecting rods for internal combustion engines, journal boxes, bearing shells, etc., which must be separated for reassembly around another component. In particular, this invention will be especially advantageous m the production of such components which must be made of high strength, high ductility metals which are not suitable for fracture splitting via conventional techniques.

## Claims

1. Method for manufacturing a component formed of parts (3, 5; 3', 5') which can be separated for reassembly around another component, wherein the method comprises the steps of:
a) forging two separate parts (3, 5; 3', 5');
b) bonding the two parts (3, 5; 3', 5') together along corresponding surfaces thereof to form a single part;
c) machining the resulting single part; and
d) fracturing the single part along a parting line extending along the bonded surfaces;
**characterized in**
that the corresponding surfaces are interfitted one within the other when bonding the two parts (3; 5; 3', 5') together to form the single part, so that the two parts (3, 5; 3', 5') are bonded via at least a mechanical interference connection between the inter-fitting surfaces, and
that the two parts (3; 5; 3'; 5') are separated along the original interfitting surfaces, so as to obtain two parts (3, 5; 3', 5') having two matched surfaces that need no further processing before being reassembled.

2. Method according to claim 1, characterized in that step b) is performed on the parts (3, 5; 3', 5') produced by forging without preliminary machining thereof.

3. Method according to any one of the preceding claims, characterized in that the interfitting surfaces comprise a ridge (9) having a wedge-shaped cross section formed on one of the parts (3, 5; 3', 5') and a groove (7) having a wedge-shaped cross section formed on the other of the parts (3, 5; 3', 5').

4. Method according to any one of claims 1 or 2, characterized in that the interfitting surfaces comprise at least one lug (12) formed on one of the parts (3, 5; 3', 5') and a lug-shaped recess (14) formed on the other of the parts (3, 5; 3', 5').

5. Method according to any one of the preceding claims, characterized in that step b) is performed by forging or cold coining.

6. Method according to any one of the preceding claims, characterized in that the component is a connecting rod (1) and the two parts (3, 5; 3', 5') are a rod part and a cap part which, when assembled together, define a bore having a center lying on the parting line.

7. Method according to any one of the preceding claims, characterized in that the parts (3, 5; 3', 5') are made of the high strength, high ductility alloy.

## Patentansprüche

1. Verfahren zur Herstellung eines Bauteils, das aus Teilen (3, 5; 3', 5') gebildet ist, die zum Wiederzusammenbau um ein anderes Bauteil herum getrennt bzw. separiert werden können, wobei das Verfahren die Schritte aufweist:
a) Schmieden der zwei getrennten Teile (3, 5; 3', 5');
b) Verbinden der zwei Teile (3, 5; 3', 5') entlang korrespondierender Oberflächen davon, um ein einziges Teil zu bilden;
c) Bearbeiten des resultierenden, einzigen Teils; und
d) Brechen des einzigen Teils entlang einer Trennfuge bzw. -linie, die sich entlang der verbundenen Oberflächen erstreckt;
**dadurch gekennzeichnet**,
daß die korrespondierenden Oberflächen ineinander gesteckt bzw. zusammengefügt werden, wenn die zwei Teile (3, 5; 3', 5') miteinander verbunden werden, um das einzige Teil zu bilden, so daß die zwei Teile (3, 5; 3', 5') über zumindest eine mechanische Eingriffsverbindung zwischen den ineinandergreifenden Oberflächen verbunden werden, und
daß die zwei Teile (3, 5; 3', 5') entlang der ursprünglichen, ineinandergreifenden Oberflächen separiert werden, um zwei Teile (3, 5; 3', 5') mit zwei angepaßten Oberflächen zu erhalten, die keine weitere Be- bzw. Verarbeitung erfordern, bevor sie wieder zusammengebaut werden.

2. Verfahren nach Anspruch 1, dadurch gekennzeichnet, daß Schritt b) auf die durch Schmieden hergestellten Teile (3, 5; 3', 5') angewendet wird, ohne deren vorherige Bearbeitung.

3. Verfahren nach einem der voranstehenden Ansprüche, dadurch gekennzeichnet, daß die ineinandergreifenden Oberflächen eine Rippe (9) mit einem keilförmigen Querschnitt, die an einem der Teile (3, 5; 3', 5') gebildet ist, und eine Nut (7) mit einem keilförmigen Querschnitt, die an dem anderen der Teile (3, 5; 3', 5') gebildet ist, aufweist.

4. Verfahren nach einem der Ansprüche 1 oder 2, dadurch gekennzeichnet, daß die ineinandergreifenden Oberflächen zumindest einen Zapfen (12), der an einem der Teile (3, 5; 3', 5') gebildet ist, und eine zapfenförmige Ausnehmung (14), die an dem anderen der Teile (3, 5; 3', 5') gebildet ist, aufweisen.

5. Verfahren nach einem der voranstehenden Ansprüche, dadurch gekennzeichnet, daß Schritt b) durch Schmieden oder Kaltprägen ausgeführt wird.

6. Verfahren nach einem der voranstehenden Ansprüche, dadurch gekennzeichnet, daß das Bauteil eine Pleuelstange (1) ist und die zwei Teile (3, 5; 3', 5') ein Stangenteil und ein Deckelteil sind, die, wenn sie zusammengebaut sind, eine Bohrung mit einer Mitte definieren, die in der Trennfüge bzw. Trennlinie liegt.

7. Verfahren nach einem der voranstehenden Ansprüche, dadurch gekennzeichnet, daß die Teile (3, 5; 3', 5') aus einer hochfesten, hochduktilen Legierung hergestellt werden.

## Revendications

1. Procédé pour fabriquer un composant formé d'éléments (3, 5; 3', 5') qui peut être séparé à des fins de réassemblage autour d'un autre composant, dans lequel le procédé comprend les étapes consistant à:
a) forger deux éléments séparés (3, 5; 3', 5');
b) coller les deux éléments (3, 5; 3', 5') l'un à l'autre le long de leurs surfaces correspondantes pour former un élément unique;
c) usiner l'élément unique résultant; et
d) casser l'élément unique le long d'une ligne de séparation s'étendant le long des surfaces collées;
caractérisé
en ce que les surfaces correspondantes s'emboîtent l'une dans l'autre lors du collage des deux éléments (3, 5; 3', 5') pour former l'élément unique, si bien que les deux éléments (3, 5; 3', 5') sont collés via au moins un joint mécanique à ajustage serré entre les surfaces d'emboîtement; et
en ce que les deux éléments (3, 5; 3', 5') sont séparés le long des surfaces d'emboîtement initiales de façon à obtenir deux éléments (3, 5; 3', 5') possédant deux surfaces appariées qui ne nécessitent aucun traitement ultérieur avant d'être réassemblées.

2. Procédé selon la revendication 1, caractérisé en ce qu'on effectue l'étape b) sur les éléments (3, 5; 3', 5') obtenus par forgeage sans les soumettre à un usinage préliminaire.

3. Procédé selon l'une quelconque des revendications précédentes, caractérisé en ce que les surfaces d'emboîtement comprennent une nervure (9) possédant une section transversale cunéiforme formée sur un des éléments (3, 5; 3', 5') et une rainure (7) possédant une section transversale cunéiforme formée sur l'autre élément (3, 5; 3', 5').

4. Procédé selon l'une quelconque des revendications 1 ou 2, caractérisé en ce que les surfaces d'emboîtement comprennent au moins un ergot (12) formé sur un des éléments (3, 5; 3', 5') et un évidement (14) en forme d'ergot formé sur l'autre élément (3, 5; 3', 5').

5. Procédé selon l'une quelconque des revendications précédentes, caractérisé en ce qu'on effectue l'étape b) par forgeage ou par emboutissage à froid.

6. Procédé selon l'une quelconque des revendications précédentes, caractérisé en ce que le composant est une tige de liaison (1) et les deux éléments (3, 5; 3', 5') représentent un élément en forme de tige et un élément en forme de recouvrement qui, lorsqu'ils sont assemblés l'un à l'autre, définissent un alésage dont le centre est situé sur la ligne de séparation.

7. Procédé selon l'une quelconque des revendications précédentes, caractérisé en ce que les éléments (3, 5; 3', 5') sont réalisés en un alliage à résistance élevée et à ductilité élevée.
